# EUROPEAN PATENT APPLICATION

(11) **EP 2 128 917 A1**
(43) Date of publication of application: **02.12.2009**
(21) Application number: 07832988.5
(22) Date of filing: 03.12.2007
(51) Int. Cl.: H01M 4/88, H01M 4/86, H01M 8/10

(54) **FUEL CELL ELECTRODE MANUFACTURING METHOD**

(30) Priority: 05.12.2006 JP 2006327755
(71) Applicant: Toyota Jidosha Kabushiki Kaisha, Toyota-shi, Aichi 471-8571 (JP)
(72) Inventor: ENDO, Yoshito, Toyota-shi Aichi 471-8571 (JP)
(74) Representative: Albutt, Anthony John
(86) International application number: PCT/JP2007/073732
(87) International publication number: WO 2008/069330

(57) **Abstract**

Encapsulated electrode catalyst particles 30 has electrode catalyst particles 20 encapsulated by a resin 15 with external stimulus responsiveness, specifically, it has a coated structure. The electrode catalyst particles 20 are particles for which a carbon supported catalyst 21 and an electrolyte 22 are almost uniformly dispersed. The electrode catalyst particles 20 are coated with a resin 15 which has external stimulus responsiveness. After forming a thin film using encapsulated electrode catalyst particles 30, an electrode sheet formed by removing the capsule element by applying an external stimulus to the thin film is transferred onto the electrolyte membrane, and an electrode catalyst layer is formed. By doing this, it is possible to suppress agglomeration of the electrode catalyst particles and degradation of the electrode catalyst, so it is possible to improve composition stability of the electrode catalytic ink and also possible to reduce costs. Also, by using encapsulated electrode catalytic inks, it is possible to form an electrode catalyst layer which has uniform catalyst distribution.

## Description

### TECHNICAL FIELD

The present invention relates to electrodes used for fuel cells.

### BACKGROUND ART

A fuel cell has an electrolyte membrane and a pair of electrodes (anode and cathode) arranged at both sides of the electrolyte membrane. A fuel cell that uses a solid polymer type electrolyte membrane promotes the electrochemical reaction with the electrode by forming the electrode using a carbon for which a catalyst such as platinum or the like is supported.

The electrode is formed by, for example, direct application of a catalytic ink obtained by mixing carbon particles in which a catalyst is supported, an electrolyte solution, and a dispersion medium, onto the electrolyte membrane , or by doing transfer an electrode sheet formed from catalytic ink to the electrolyte film. It is known that the smaller the particle diameter of the catalyst and the more evenly the catalyst is dispersed in the electrode, the greater the improvement in the catalytic activity.

However, when the catalyst particle diameter is small, the catalyst particles agglomerate together, and unevenness occurs in the catalytic ink composition. Also, because the catalyst used for fuel cells is highly active, the catalyst and the dispersion medium react, and as time passes, the composition stability of the catalytic ink decreases. Using a catalytic ink with unevenness in the composition or a catalytic ink with low composition stability, it is not easy to form an electrode having uniform catalyst distribution.

### DISCLOSURE OF THE INVENTION

This invention was created considering this kind of problem, and an advantage of some aspects of the invention is that it improves the dispersibility of the catalytic ink, and suppresses changes in the composition over time.

To address at least part of the problems described above, the first aspect of the invention provides a method of manufacturing a fuel cell electrode. With the manufacturing method of the fuel cell electrode of the first mode of the invention, with the manufacturing method of the fuel cell electrode comprising:
forming coated electrode catalyst particles by coating electrode catalyst particles with a compound having external stimulus responsiveness, wherein the electrode catalyst particles are comprised of an electrolyte and catalyst particles that catalytically active substance is supported on a carrier; forming a thin film ,using the coated electrode catalyst particles, applying an external stimulus the thin film, whereby the compound is removed from the thin film, or, proton conductivity is expressed on the coated electrode catalyst particles forming the thin film.

With the first aspect of the invention, because the electrode catalyst particles are coated with a compound, it is possible to suppress the agglomeration of catalyst particles within the catalytic solution and also possible to improve the composition stability and it is possible to form an electrode with evenly distributed catalyst particles. Also, the compound has external stimulus responsiveness, so by applying an external stimulus to the thin film formed using a catalytic solution, it possible to easily remove the compound that is not needed for the electrode reaction, or it is possible to express proton conductivity, so it is possible to improve the catalytic activity, and it is possible to improve the power generating efficiency of the fuel cell.

With the first aspect of the invention, the electrode catalyst particles are particles for which the catalyst particles and the electrolyte are almost uniformly mixed.

With the first aspect of the present invention, this is coated with a compound in a state with uniform mixing, so it is possible to suppress agglomeration of catalyst particles, and it is possible to form an electrode with uniform dispersion of the electrode catalyst and the electrolyte.

With the first aspect of the invention, the electrode catalyst particles are formed by the electrode catalyst particles the catalyst particles being coated with an electrolyte.

With the first aspect of the invention, each catalyst particle is coated with an electrolyte, so it is possible to effectively suppress agglomeration of the catalyst particles, and it is possible to control the ratio of the electrode catalyst and the electrolyte with good precision. Therefore, with the manufacturing method of this invention, it is possible to form electrodes with more precise uniform dispersion of the electrode catalyst and the electrolyte.

With the first aspect of the invention, the external stimulus responsiveness includes dissolving of the compound or decomposition of the compound, by an external stimulus, and the removal of the compound is performed by applying to the thin film as the external stimulus at least one of a temperature change and a change in the hydrogen ion concentration.

With the first aspect of the invention, by applying an external stimulus, it is possible to easily express proton conductivity in coated particles.

With the first aspect of the invention, the coating of the electrode catalyst is performed by spray drying the electrode catalyst particles with an atmosphere of a solution containing the compound.

With the first aspect of the invention, it is possible to easily coat the electrode catalyst particles with the compound without unevenness.

With the first aspect of the invention, the compound has an interpenetrating network structure.

With a compound having an interpenetrating network structure, because this is a strong structure with a dense network, the electrode catalyst particles can be efficiently coated over a long time using the manufacturing method of this invention. Also, with a compound having an interpenetrating network structure, in terms of structure, it is possible to reversibly expand and contract, so with the manufacturing method of this invention, it is possible to transmit hydrogen ions or gas by expansion of the compound using an external stimulus.

The second aspect of the invention provides a fuel cell electrode. The fuel cell electrode of the second aspect of the invention manufactured using the manufacturing method described above.

With the fuel cell electrode of the second aspect of the invention, the catalyst particles and the electrolyte are uniformly dispersed, so it is possible to improve the catalyst activity, and it is possible to improve the power generating efficiency of the fuel cell.

The third aspect of the invention provides an electrode catalyst solution. With the electrode catalytic solution of the third aspect of the invention comprises
coated particles that an electrode catalyst is coated with a compound having external stimulus responsiveness are used as the dispersoid, wherein the electrode catalyst particles are comprised of an electrolyte and catalyst particles that catalytically active substance is supported on a carrier.

With the electrode catalytic solution of the third aspect of the invention, the electrode catalyst particles are coated with a compound, so it is possible to suppress the agglomeration of catalyst particles within the catalytic solution, and it is possible to form electrodes with uniform dispersion of the catalyst particles. Also, with the electrode catalytic solution of the invention, by the coating the electrode catalyst particles with a compound, it is possible to suppress the reaction between the catalyst particles and the dispersion medium, and it is possible to improve the composition stability over time of the electrode catalytic solution.

With this invention, the various aspects described above can be applied by being suitably combined, or with a portion omitted.

### BRIEF DESCRIPTION OF THE DRAWINGS

FIG. 1 illustrates a cross section diagram of a single cell of a fuel cell of the first embodiment.
FIG. 2 illustrates a pattern diagram describing encapsulated electrode catalyst particles of the first embodiment.
FIG. 3 shows a flow chart for describing the manufacturing process of the electrode catalytic layer of the first embodiment.
FIG. 4 illustrates a pattern diagram describing the encapsulation device of the first embodiment.
FIG. 5 illustrates a pattern diagram describing the removal of the capsule element of the encapsulated electrode catalyst particles of the first embodiment.
FIG. 6 shows a particle distribution graph representing the particle distribution comparison of the encapsulated electrode catalyst particles of the first embodiment and the electrode catalyst particles of the prior art.
FIG. 7 shows an average particle diameter chart representing a comparison of the average particle diameter change volume over time of the encapsulated electrode catalyst particles of the first embodiment and the catalyst particles of the prior art.
FIG. 8 shows an alcohol weight chart representing a comparison of the alcohol weight change volume over time of the encapsulated electrode catalytic ink of the first embodiment and the catalytic ink of the prior art.
FIG. 9 shows a voltage change chart representing the comparison of the voltage changes over time of the encapsulated electrode catalytic ink of the first embodiment and the catalytic ink of the prior art.
FIG. 10 illustrates a pattern diagram describing the electrode catalyst particles in the catalytic ink of the second embodiment.
FIG. 11 illustrates a pattern diagram describing the encapsulation device of the second embodiment.
FIG. 12 illustrates a pattern diagram describing the electrode catalyst particles in the catalytic ink of the third embodiment.
FIG. 13 illustrates a pattern diagram describing the encapsulation device of the third embodiment.

### BEST MODE FOR CARRYING OUT THE INVENTION

Following, we will describe aspects of carrying out the invention based on embodiments while referring to suitable drawings.

### A. First Embodiment

### A1. Fuel Cell:

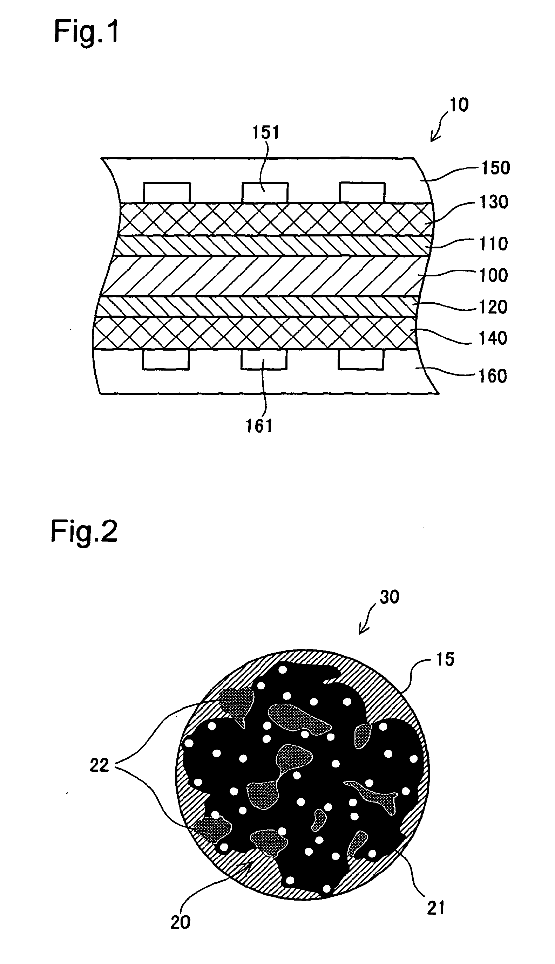

With the first embodiment, we will describe a fuel cell which has an electrode catalyst layer formed using electrode catalyst layer forming paste used for fuel cells while referring to FIG. 1. FIG. 1 illustrates a cross section diagram of a single cell 10 of the fuel cell of the first embodiment. The fuel cell of this embodiment has a plurality of single cells 10 laminated, and is formed by gripping from both ends using end plates. The fuel cell of this embodiment is a solid polymer type fuel cell that receives a supply of hydrogen gas and air, and generates power by an electrochemical reaction of hydrogen and oxygen.

As shown in FIG. 1, the single cell 10 is equipped with an electrolyte membrane 100, an anode electrode catalyst layer 110, a cathode electrode catalyst layer 120, gas diffusion layers 130 and 140, and separators 150 and 160.

The electrolyte membrane 100 is equipped with proton conductivity, is a thin film of a solid polymer material showing good electrical conductivity in a moist state, and is formed in a rectangle smaller than the outline of the separator 150, 160. For the electrolyte membrane 100, Nafion is used, for example.

The anode electrode catalyst layer 110 and the cathode electrode catalyst layer 120 are formed on the surface of the electrolyte membrane 100, and these are formed using carbon in which the catalyst which promotes the electrochemical reaction is supported. Used for the catalyst is platinum, for example. The anode electrode catalyst layer 110 and the cathode electrode catalyst layer 120 are formed using particles for which electrode catalyst particles consisting of carbon in which the catalyst is supported and an electrolyte are coated with resin which has external stimulus responsiveness. Hereafter, with this embodiment, coating of the catalyst supported carbon and the electrode catalyst particles with resin is called "encapsulation," and encapsulated electrode catalyst particles are called encapsulated electrode catalyst particles. Formation of the encapsulated electrode catalyst particles and the electrode catalyst layer are described in detail later.

The gas diffusion layers 130 and 140 are porous material made of carbon with porosity of approximately 20 %, and for example, are formed using carbon cloth or carbon paper. Gas diffusion layers 130 and 140 diffuse the reaction gas used in power generation by the fuel cell in the thickness direction, and supply it to the entire surface of the electrode catalyst layers 110 and 120.

The separators 150 and 160 are formed using a gas impermeable conductive member, for example a precisely formed carbon or press formed metal plate with carbon compressed to be gas impermeable. Flow paths 151 and 161 are formed on the separator to allow reaction gas to flow through.

### A2. Encapsulated Electrode Catalyst Particles:

We will describe the encapsulated electrode catalyst used for forming the electrode catalyst layer while referring to FIG. 2. FIG. 2 illustrates a pattern diagram describing the encapsulated electrode catalyst particles of the first embodiment. The encapsulated electrode catalyst particles 30 have a structure whereby the electrode catalyst particles 20 are encapsulated, specifically, coated, with the resin 15 which has external stimulus responsiveness. The electrode catalyst particles 20 are particles for which the carbon supported catalyst 21 and the electrolyte 22 are almost uniformly dispersed. The electrode catalyst particles 20 are coated with the resin 15 which has external stimulus responsiveness.

External stimulus responsiveness means the property of a volume change or decomposition occurring in response to when an external stimulus (e.g. change in temperature or hydrogen ion index (pH)) is applied.

Used as monomers with external stimulus responsiveness, specifically response to heat, are for example N-n-propyl acryl amide, N-n-propyl methacryl amide, N-n-isopropyl acryl amide, N-isopropyl methacryl amide, N, N-diethyl acryl amide, N-methyl-N-n-propyl acryl amide, N-methyl-N-isopropyl acryl amide, N-tetrahydro furfuryl acryl amide, N-tetrahydro furfuryl methacryl amide, N-ethoxy propyl acryl amide, N-ethoxy propyl methacryl amide, N-ethoxy ethyl acryl amide, N-1-methyl-2-methoxy ethyl acryl amide, N-morpholino propyl acryl amide, N-methoxy propyl acryl amide, N-methoxy propyl methacryl amide, and N-isopropoxy ethyl methacryl amide.

Also, as the polymer compound responding to the pH change, for example, used are polyacrylic acid, polymethacrylic acid, poly vinyl sulfonic acid, poly acryl amide, and simple polymers or copolymers of alkaline metal salt containing materials of each acid.

The fuel cell electrode catalyst layer of this embodiment is formed using encapsulated electrode catalytic ink with the encapsulated electrode catalyst particles 30 as the dispersing material. Following, we will describe the manufacturing process of the electrode catalyst layer.

### A3. Manufacturing Process:

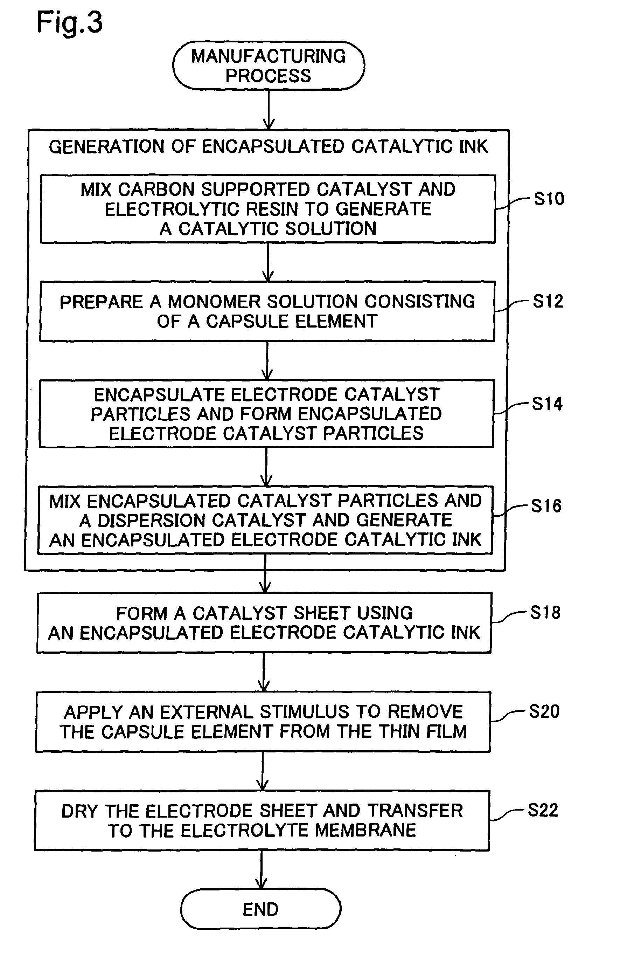

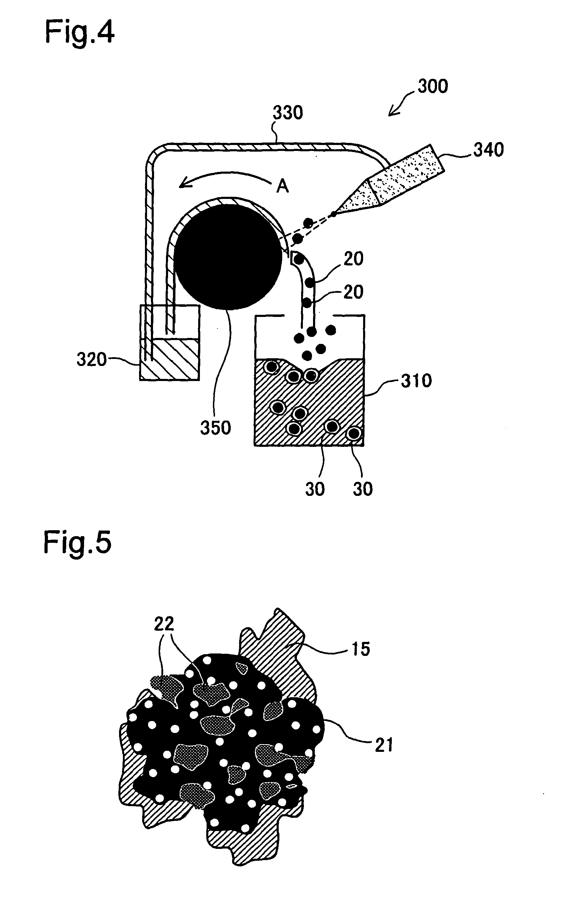

Referring to FIG. 3 to FIG. 5, we will describe the manufacturing process of the electrode catalyst layer of the first embodiment. FIG. 3 shows a flow chart for describing the manufacturing process of the electrode catalyst layer of the first embodiment. FIG. 4 illustrates a pattern diagram describing the encapsulation device of the first embodiment. FIG. 5 illustrates a pattern diagram describing the removal of the capsule element from the encapsulated electrode catalyst particles 30 of the first embodiment.

A monomer solution of a resin 15 which is the capsule element of the encapsulated electrode catalyst particle 30 is created (step S10). In specific terms, a monomer solution is generated by placing a monomer solution consisting of acryl amide 40 %, N-1-methyl-2-methoxy ethyl acryl amide 60 %, and a small amount of poly methacrylic acid in a beaker and stirring strongly.

An electrode catalyst solution is generated by mixing a carbon supported catalyst 10 %, electrolytic resin 10 %, water 40 %, alcohol 50 %, and a polymerization initiator 5 % (step S12). At this time, the carbon supported catalyst and the electrolytic resin are mixed and form the electrode catalyst particles 20. For the polymerization initiator, it is also possible to use benzoyl peroxide, for example.

The electrode catalyst particles 20 in the catalytic solution are encapsulated by the monomer solution, and form the encapsulated electrode catalyst particles 30 (step S14). The encapsulation of the electrode catalyst particles 20 is performed using the encapsulation device 300 shown in FIG. 4. The encapsulation device 300 is equipped with a monomer solution container 310, an electrode catalytic solution container 320, an electrode catalytic solution supply path 330, a sprayer 340, and a rotating drum type steel plate 350. The sprayer 340 is equipped with a nozzle for spraying particles of average particle diameter 0.25 µm. The rotating drum type steel plate 350 rotates in the direction of arrow A shown in FIG. 4.

The catalytic solution held in the electrode catalytic solution 320 is supplied to the sprayer 340 through the electrode catalytic solution supply path 330. The sprayer 340 blows the supplied catalytic solution as fine particles onto the rotating drum type steel plate 350. The catalytic solution particles blown onto the rotating drum type steel plate 350 are rebounded by the rotation of the rotating drum type steel plate 350, and fly toward the monomer solution container 310. The volatile elements contained in the catalytic solution (water, alcohol) are blown from the sprayer 340, and vaporize by the time it is input into to the monomer solution container 310, so the electrode catalyst particles 20 and the polymerization initiator are input to the monomer solution container 310. By the work of the polymerization initiator input to the monomer solution container 310 together with the electrode catalyst particles 20, the monomer held in the monomer solution container 310 is polymerized and becomes a polymer, and the electrode catalyst particles 20 are encapsulated. The electrode catalyst particles 20 encapsulated in this way are the encapsulated electrode catalyst particles 30. The encapsulated electrode catalyst particles 30 are accumulated inside the monomer solution container 310, and it is possible to obtain the encapsulated electrode catalyst particles 30 by filtering and drying the monomer solution inside the monomer solution container 310.

A ratio of 15 wt % of the encapsulated electrode catalyst and 85 wt % of the water-alcohol mixed solvent which is the dispersion medium are mixed, this is irradiated using ultrasonic waves, and the encapsulated electrode catalytic ink is generated (step S16). By irradiating with ultrasonic waves, it is possible to disperse the agglomerations in the liquid.

A thin film is formed using the encapsulated electrode catalytic ink generated using the aforementioned method (step S18). In specific terms, the encapsulated electrode catalytic ink is uniformly coated on a fluorine resin sheet (with this embodiment, a Teflon (TM) sheet), and after drying the surface, reduced pressure drying at 130 °C is performed while applying surface pressure of 0.5 MPa/cm² uniformly to the entire coated surface.

Next, an external stimulus is applied to the thin film formed on the Teflon sheet, and the capsule elements are removed (step S20). In specific terms, by repeatedly boiling the thin film after drying with a 100 °C 1 M sulfuric acid acidic solution (20 % of the solution is ethanol) for each Teflon sheet, a temperature change and a pH decrease, specifically, an external stimulus, is applied to the capsule elements of the thin film formed on the Teflon sheet. Because the capsule element acryl amide, N-1-methyl-2-methoxy ethyl acryl amide, and poly methacrylic acid have external stimulus responsiveness, the polymer is decomposed to a monomer using an external stimulus, the capsule elements are dissolved as shown in FIG. 5, and the encapsulated electrode catalyst particles 20 emerge. Furthermore, the thin film is repeatedly boiled and purified using purified water for each Teflon sheet to remove the remaining capsule elements on the thin film, and this is heated and dried under reduced pressure. By working in this way, an electrode sheet is formed for which the capsule element has been removed from the thin film.

The electrode sheet formed in this way is transferred to the electrolytic membrane, and the anode electrode catalyst layer 110 and the cathode electrode catalyst layer 120 are formed (step S22).

### A4. Performance Evaluation of the Encapsulated Electrode Catalytic Ink:

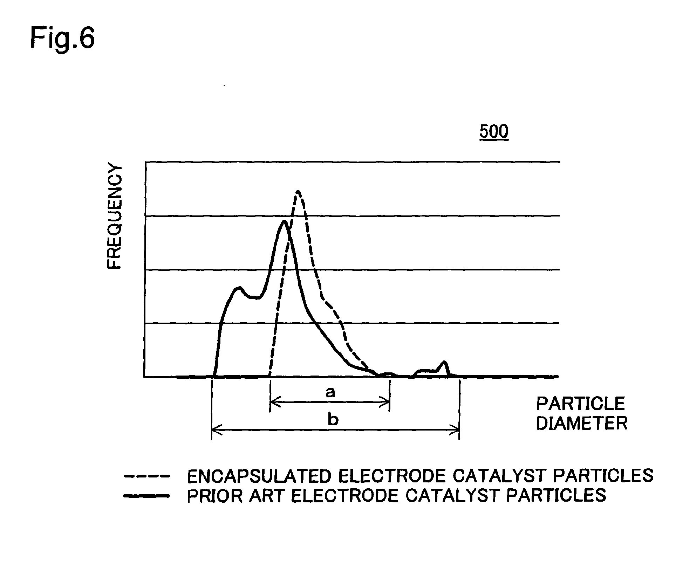

We will describe the performance of encapsulated electrode catalytic ink generated with the process of steps S10 to S16 described above from various perspectives while referring to FIG. 6 to FIG. 9.

### A4-1. Particle Size Distribution:

We will describe the particle size distribution of the encapsulated electrode catalyst particles 30 described above. FIG. 6 shows a particle size distribution graph 500 representing the particle size distribution comparison of the encapsulated electrode catalyst particles of the first embodiment and the electrode catalyst particles of the prior art. Note that with this embodiment, the electrode catalyst particles of the prior art are represented as electrode catalyst particles that have not been encapsulated, and the catalytic ink of the prior art is represented as catalytic ink which used electrode catalyst particles which have not been encapsulated as the dispersing material. Note that measurement of the particle size distribution was performed using median diameter measurement using the MT3000 made by Microtrac Co. immediately after the catalytic ink is generated.

The horizontal axis of the particle size distribution graph 500 represents the particle diameter, and the vertical axis represents the frequency of emergence of particles. With the particle size distribution graph 500, the particle diameter of the prior art catalyst particles, specifically, the catalyst particles that are not encapsulated, are distributed in range b. Meanwhile, the particle diameter of the encapsulated electrode catalyst particles are distributed in range a (a < b). Specifically, the encapsulated electrode catalyst particles have less particle diameter variation than the prior art catalyst particles. This is because with encapsulation of the electrode catalyst particles, during stirring and mixing of the electrode catalyst particles and water-alcohol solvent, the agglomeration of the electrode catalyst particles to each other is suppressed. To form an electrode catalyst layer with uniform dispersion of the catalyst, it is desirable to have little variation of the particle diameter of the electrode catalyst particles, so by encapsulating the electrode catalyst particles, it is possible to form the electrode catalyst layer with uniform dispersion of the catalyst with good precision.

### A4-2. Change in Average Particle Diameter Over Time:

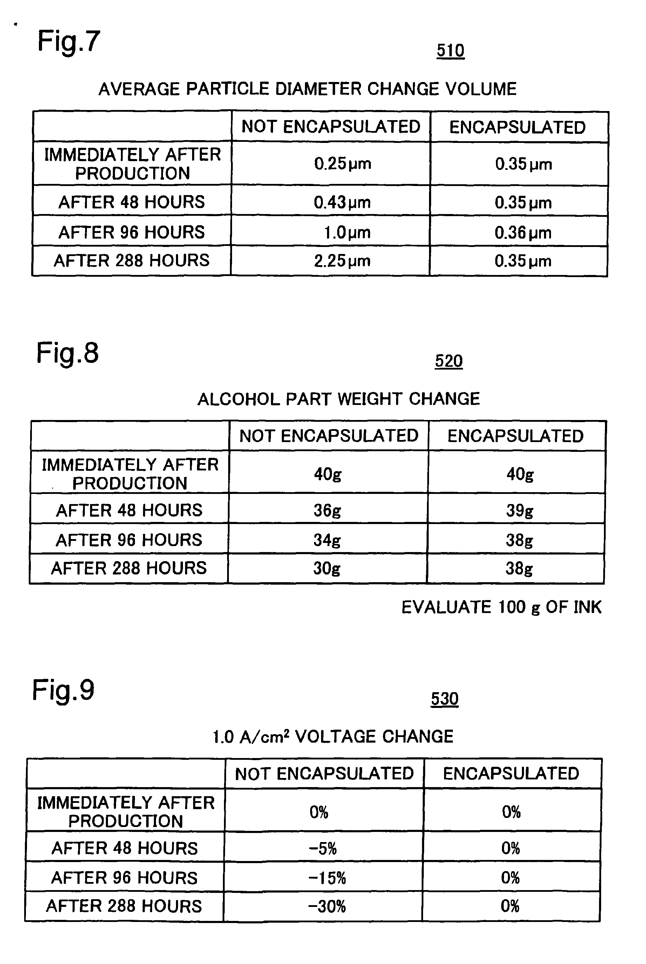

Next, we will describe changes in average particle diameter over time of encapsulated catalyst particles. FIG. 7 shows an average particle diameter chart 510 representing a comparison of the average particle diameter change volume over time of the encapsulated electrode catalyst particles of the first embodiment and the catalyst particles of the prior art. The average particle diameter chart 510 represents the average particle diameter of the electrode catalyst particles when 48 hours have elapsed, 96 hours have elapsed, and 288 hours have elapsed from immediately after the catalytic ink is produced. For the average particle diameter, the average is calculated from the median diameter measured using the MT3000 made by Microtrac Co.

As shown in the average particle diameter chart 510, the encapsulated electrode catalyst particles of this embodiment almost don't change at all from the particle diameter of 0.35 µm up to when 288 hours have elapsed from immediately after production. This is because since the electrode catalyst particles are encapsulated with resin, the electrode catalyst particles do not agglomerate with each other even when time has passed. By using the encapsulated electrode catalyst particles of this embodiment, it is possible to form an electrode catalyst layer of almost uniform thickness using either the encapsulated electrode catalyst ink immediately after production, or using the encapsulated electrode catalyst ink when for example 288 hours have elapsed after production.

Meanwhile, the average particle diameter of the prior art electrode catalyst particles that are not encapsulated increases together with the passage of time. As shown in the average particle diameter chart 510, with the electrode catalyst particles that are not encapsulated, the particle diameter which was 0.25 µm immediately after production increases as time elapses and becomes 0.43 µm when 48 hours have elapsed, and further becomes 2.25 µm when 288 hours have elapsed from catalytic ink production. This is because since the electrode catalyst particles are not encapsulated, the electrode catalyst agglomerates together as time passes. When electrode catalyst particles that are not encapsulated are used after a long time has elapsed, the electrode catalyst layer is formed thickly or unevenly, so this invites a decrease in the power generating efficiency of the fuel cell.

It is desirable from the perspective of cost reduction to not produce the catalytic ink each time the electrode catalyst layer is formed, but to mass produce it at one time and save it, and to use it divided over several times, so by forming the electrode catalyst layer using the encapsulated electrode catalyst particles of this embodiment, it is possible to reduce costs, and it is also possible to form an electrode catalyst layer of an almost uniform thickness that is stable over a long time.

### A4-3. Changes in the Weight of the Alcohol Part:

Next, we will describe changes in the weight of the alcohol part of the encapsulated electrode catalytic ink. FIG. 8 shows an alcohol weight chart 520 representing a comparison of the alcohol weight change volume over time of the encapsulated electrode catalytic ink of the first embodiment and the catalytic ink of the prior art. The alcohol weight change chart 520 represents the changes in the weight of the alcohol part in 100g of the encapsulated electrode catalytic ink and the electrode catalytic ink that is not encapsulated when 48 hours have elapsed, 96 hours have elapsed, and 288 hours have elapsed from immediately after production of the catalytic ink.

As shown in the alcohol weight change chart 520, with the encapsulated electrode catalytic ink of this embodiment, the alcohol part weight only decreases by 2 g, specifically, 0.05 %, even when 288 hours have elapsed from immediately after production. This is because with the encapsulated electrode catalytic ink, the alcohol which is the catalytic ink solvent does not react with the electrode catalyst particles encapsulated with resin, and the alcohol part weight decreases only by the volume that vaporizes naturally.

In contrast to this, with the electrode catalytic ink that is not encapsulated, the alcohol part weight decreases as time passes, and when 288 hours elapsed from immediately after production, the alcohol part weight had decreased by 10 g, specifically, 25 %. The decrease in the alcohol part weight is due to oxidation of the alcohol in the catalytic ink due to the operation of the catalyst. The oxidation of the alcohol brings on poisoning of the electrode catalyst, so the catalyst activity decreases, and also the composition stability of the electrode catalytic ink decreases.

Therefore, the composition stability of the encapsulated electrode catalytic ink of this embodiment is high, and by using encapsulated electrode catalytic ink, it is possible to form an electrode catalyst layer for which the electrode catalyst is dispersed uniformly.

### A4-4. Voltage Change:

Next, we will describe voltage changes of the encapsulated electrode catalytic ink. FIG. 9 shows a voltage change chart 530 representing a comparison of the changes in voltage over time of the encapsulated electrode catalytic ink of the first embodiment and the prior art catalytic ink. The voltage change chart 530 represents the ratio of the changes in voltage at current density 1.0 A/cm² of the encapsulated electrode catalytic ink and the electrode catalytic ink that is not encapsulated at when 48 hours have elapsed, 96 hours have elapsed, and 288 hours have elapsed from immediately after production of the catalytic ink.

As shown in voltage change chart 530, the encapsulated electrode catalytic ink of this embodiment has a voltage change of 0 %, specifically, the voltage does not change even when 288 hours have elapsed from immediately after production. This is because with the encapsulated electrode catalytic ink, the electrode catalyst particles are encapsulated by resin, and degradation of the electrode catalyst particles is suppressed.

In contrast to this, with the electrode catalytic ink that is not encapsulated, the obtained voltage decreases as time passes, and compared to the voltage obtained immediately after production, the voltage obtained when 288 hours have elapsed decreased by 30 %. This is because since the electrode catalytic ink is not encapsulated, catalyst poisoning and degradation occur as time passes, so the catalytic activity decreases and also the composition stability of the electrode catalytic ink decreases.

Therefore, by using the encapsulated electrode catalytic ink of this embodiment, it is possible to form an electrode catalyst layer that can obtain a stable, desired voltage.

With the encapsulated electrode catalytic ink of the first embodiment, since the electrode catalyst particles are encapsulated by resin, it is possible to suppress the agglomeration of electrode catalyst particles and the poisoning of the electrode catalyst due to oxidation of the alcohol in the electrode catalytic ink. Therefore, it is possible to improve the composition stability of the electrode catalytic ink and also possible to reduce costs. Also, by using the encapsulated electrode catalytic ink, it is possible to form an electrode catalyst layer having uniform catalyst distribution.

### B. Second Embodiment:

With the first embodiment, carbon supported catalyst particles and an electrolyte are stirred and mixed. With the second embodiment, the carbon supported catalyst particles are coated with an electrolyte, the carbon supported catalyst particles coated with the electrolyte (hereafter called secondary catalyst particles with this embodiment) are encapsulated by resin, and encapsulated electrode catalyst particles are formed.

### B1. Encapsulated Electrode Catalyst Particles:

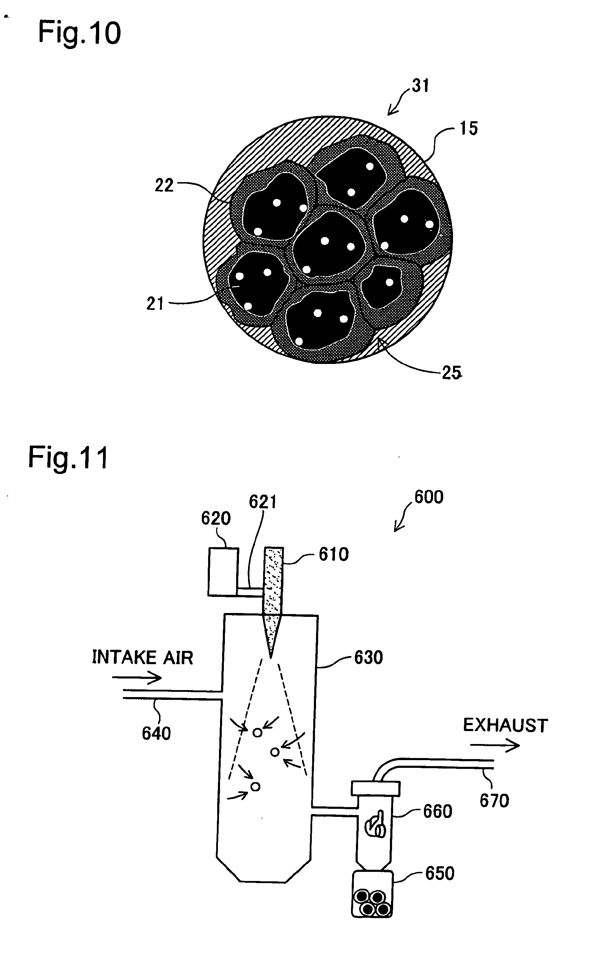

FIG. 10 illustrates a pattern diagram describing the electrode catalyst particles in the catalytic ink of the second embodiment. The encapsulated electrode catalyst particles 31 have a structure with which the electrode catalyst particles 25 are encapsulated by a resin 15 with external stimulus responsiveness. The electrode catalyst particles 25 have a structure with which a plurality of secondary catalyst particles 20a is agglomerated. Each secondary catalyst particle 20a has the carbon supported catalyst 21 coated with an electrolyte 22.

### B2. Method of Manufacturing Encapsulated Electrode Catalytic Ink:

We will describe the method of manufacturing the encapsulated electrode catalytic ink of the second embodiment while referring to FIG. 11. FIG. 11 illustrates a pattern diagram describing an encapsulation device 600 of the second embodiment. The encapsulation device 600 is equipped with a sprayer 610, an electrode catalytic solution container 620, a chamber 630, a monomer solution introduction port 640, an encapsulated electrode catalytic ink particle recovery bottle 650, a powder recovery container 660, and an exhaust port 670. The sprayer 610 is equipped with a nozzle for spraying particles of average particle diameter 0.25 µm. The electrode catalyst solution is produced in the same way as the first embodiment.

The catalytic ink held in the electrode catalytic solution container 620 is supplied to the sprayer 610 through the electrode catalytic solution supply path 621. The sprayer 610 uses the air atomizing method to spray the supplied catalytic ink within the chamber. By using the air atomizing method, the volatile elements (water, alcohol) are vaporized instantly from the electrode catalyst particles, and the electrolyte contained in the catalytic ink is adsorbed on the surface of the carbon supported catalyst particles. By working in this way, secondary catalyst particles for which the electrolyte 22 coats the carbon supported catalyst particles are formed.

The inside of the chamber 630 is set to a reduced-pressure dry state, and it is filled with monomer vapor supplied from the monomer solution introduction port 640. By the work of the polymerization initiator input to the chamber 630 together with the electrode catalyst particles 20, the monomer that is filled inside the chamber 630 becomes a polymer, and the electrode catalyst particles 25 that fly in the monomer vapor are encapsulated. The electrode catalyst particles 25 which are encapsulated are the encapsulated electrode catalyst particles 31. The encapsulated electrode catalyst particles 31 are accumulated in the encapsulated electrode catalytic ink particle recovery bottle 650 from the chamber 630 via the powder recovery container 660.

A ratio of 15 wt % of encapsulated electrode catalyst particles obtained in this way and 85 wt % of the water-alcohol mixed solvent are mixed, ultrasonic waves are irradiated, and the encapsulated electrode catalytic ink is generated.

### B3. Electrode Catalyst Layer:

The electrode catalyst layer is formed using the encapsulated electrode catalytic ink, and proton conductivity is expressed in the capsule elements of the encapsulated electrode catalyst particles from the electrode catalyst layer. In specific terms, initial warm-up driving is performed with the acidification of the fuel cell. The fuel cell changes to a strong acidic atmosphere when driving is started. Meanwhile, with amides, in an acidic atmosphere, hydrolysis is promoted, and this has the property of changing to a carboxylic acid which has amine and proton conductivity. Thus, by performing warm-up driving of a fuel cell equipped with an electrode catalyst layer formed using encapsulated electrode catalytic ink, an external stimulus of being placed in an acidic atmosphere with a pH decrease is applied to the encapsulated electrode catalyst particles which form the electrode catalyst layer, and by the hydrolysis of the amides contained in the capsule element (acryl amide, N-1-methyl-2-methoxy ethyl acryl amide), it is possible to express proton conductivity in the capsule elements of the encapsulated electrode catalyst particles.

With the encapsulated electrode catalytic ink of the second embodiment described above, it is possible to express proton conductivity in the capsule element of the encapsulated electrode catalyst particles by warm-up driving of the fuel cell. Therefore, it is possible to try to suppress the agglomeration of the electrode catalyst particles and to improve the composition stability, and also, it is possible to easily express proton conductivity in the capsule element of the encapsulated electrode catalyst particles and to try to improve catalyst activity efficiency.

Also, the encapsulated electrode catalyst particles of the second embodiment are formed by encapsulating secondary catalyst particles for which the carbon supported catalyst is coated with an electrolyte, so it is possible to uniformly form with good precision the carbon supported catalyst and the electrolyte.

### C. Third Embodiment:

With the first embodiment, encapsulated electrode catalyst particles are formed by encapsulating electrode catalyst particles formed by stirring and mixing carbon supported catalyst particles and an electrolyte, and with the second embodiment, carbon supported catalyst particles are coated with an electrolyte and the secondary catalyst particles are formed, and furthermore, a plurality of secondary catalyst particles are encapsulated to form the encapsulated electrode catalyst particles. With the third embodiment, each of the secondary catalyst particles is encapsulated to form the encapsulated electrode catalyst particles.

### C1. Encapsulated Electrode Catalyst Particles:

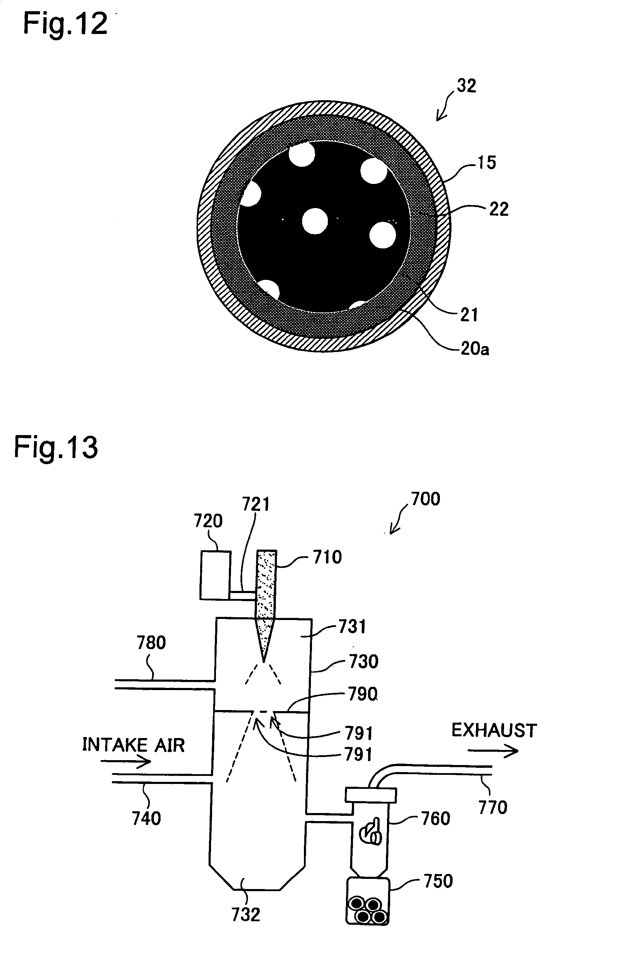

FIG. 12 illustrates a pattern diagram describing the electrode catalyst particles in the catalytic ink of the third embodiment. As shown in FIG. 12, the encapsulated electrode catalyst particles 32 are particles for which the electrode catalyst particles 27 are encapsulated with a resin 15 which has external stimulus responsiveness. The electrode catalyst particle 27 is one particle for which the carbon supported catalyst 21 is coated with the electrolyte 22.

### C2. Process of Manufacturing the Encapsulated Electrode Catalyst Ink:

We will describe the method of manufacturing the encapsulated electrode catalyst ink of the third embodiment while referring to FIG. 13. FIG. 13 illustrates a pattern diagram describing the encapsulation device 700 of the third embodiment. The encapsulation device 700 is equipped with a sprayer 710, an electrode catalyst solution container 720, a chamber 730, a monomer solution introduction port 740, an encapsulated electrode catalytic ink particle recovery bottle 750, a powder recovery container 760, an exhaust port 770, a mist electrolytic solution introduction port 780, and an internal divider 790. The sprayer 710 is equipped with a nozzle that sprays particles of average particle diameter 0.25 µm. Note that the catalytic solution is produced in the same way as with the first embodiment.

The chamber 730 is divided into the electrolytic solution introduction part 731 and the monomer fill unit 732 sandwiching the internal divider 790, and with the internal divider 790 at the center, a plurality of holes 791 of diameter 1 mm are formed. Note that the electrolytic solution introduction part 731 has the pressure reduction level and the number of holes 791 adjusted so as to have at least 20 kPa positive pressure compared to the monomer fill unit 732. By working in this way, the secondary catalyst particles formed by the electrolytic solution introduction part 731 on the internal divider 790 pass through the holes 791 and are suctioned to the monomer fill unit 732.

The catalytic ink held in the electrode catalyst solution container 720 is supplied to the sprayer 710 through the electrode catalytic solution supply path 721. The sprayer 710 sprays the supplied catalytic ink within the electrolytic solution introduction part 731. The electrolytic solution is blown from the electrolytic solution introduction port 780 into the electrolytic solution introduction part 731, and the particles sprayed from the sprayer 710 are coated with an electrolyte and the electrode catalyst particles 27 are formed. The electrode catalyst particles 27 are suctioned to the monomer fill unit 732 through the holes 791, and fly inside the monomer fill unit 732. The monomer filled inside the monomer fill unit 732 is polymerized by the polymerization initiator contained in the catalytic solution and becomes a polymer, and this encapsulates the electrode catalyst particles 27 flying within the monomer fill unit 732. The encapsulated particles are the encapsulated electrode catalyst particles 32. The encapsulated electrode catalyst particles 32 are accumulated in the encapsulated electrode catalytic ink particle recovery bottle 750 from the chamber 730 via the powder recovery container 760.

A ratio of 15 wt % of the encapsulated electrode catalyst obtained in this way and 85 wt % of the water-alcohol mixed solvent which is the dispersing medium are mixed, ultrasonic waves are lightly irradiated, and encapsulated electrode catalytic ink is generated.

### C3. Electrode Catalyst Layer:

A catalyst sheet is formed using the encapsulated electrode catalytic ink generated using the method noted above, the capsule element of the encapsulated electrode catalyst particles are removed from the catalyst sheet, and the electrode catalyst layer is formed. In specific terms, the 1 M sulfuric acid acidic solution is uniformly coated on the Teflon sheet and dried in advance, the encapsulated electrode catalytic ink is uniformly coated on this, and furthermore, before drying the surface of the coated encapsulated electrode catalytic ink, 1M of sulfuric acid acidic solution is uniformly coated on that surface, and this is held for approximately 5 minutes at 80 °C. By working in this way, it is possible to decompose the capsule element of the encapsulated electrode catalyst particles which is the dispersing material of the encapsulated electrode catalytic ink coated on the Teflon sheet. After decomposing the capsule element, the residual element of the capsule element is removed by boiling and purifying the catalyst sheet repeatedly with purified water, and by drying this, the electrode sheet is formed. By transferring the electrode sheet on the electrolytic membrane, the electrode catalyst layer is formed. With the encapsulated electrode catalytic ink of the third embodiment described above, it is possible to respectively encapsulate the secondary catalyst particles, so it is possible to try to suppress progression of the agglomeration of the secondary catalyst particles and to improve the composition stability of alcohol oxidation and the like. Also, it is possible to easily remove the capsule element using the sulfuric acid acidic solution, so it is possible to form the surface area of the electrode catalyst broadly, and it is possible to improve the catalyst activity. Thus, by using the electrode catalyst layer formed by the encapsulated electrode catalytic ink of the third embodiment, it is possible to improve the power generating efficiency of the fuel cell.

### D. Variation Examples:

(1) With the second embodiment described above, by forming both the anode electrode catalyst layer 110 and the cathode electrode catalyst layer 120 using encapsulated electrode catalytic ink, degradation of the electrode catalyst is suppressed. However, compared to the anode electrode catalyst layer, the cathode electrode catalyst layer has a greater effect of decreasing the reaction efficiency due to polarization resistance, so it is known that the chemical reaction speed is slower than that of the anode electrode catalyst layer. Because of that, the effect on the catalyst activity of the electrode catalyst layer due to catalyst degradation and ink degradation (due to products due to oxidation of the alcohol being adsorbed in the catalyst and the like) is relatively large with the cathode electrode layer compared to the anode electrode catalyst layer. Thus, it is also possible to form the anode electrode catalyst layer which is comparatively not easily affected by catalyst degradation using catalytic ink which uses electrode catalyst particles which are not encapsulated as the dispersing material, and to form the cathode electrode catalyst layer using encapsulated electrode catalyst ink which uses encapsulated electrode catalyst particles as the dispersing material.
(2) The polymer formed by the monomer solution being reacted with a polymerization initiator and being polymerized in the first embodiment to the third embodiment can also have an interpenetrating polymer network (IPN) structure. The interpenetrating polymer network structure has network structures consisting of two types of polymer compounds being overlapped with each other, and the mechanical strength is much stronger than two types of mechanical mixtures. The interpenetrating polymer network structure can be formed by having a second monomer penetrate a first network structure polymer and polymerizing this. By using an interpenetrating network structure for the polymer compound of the capsule element, it is possible to coat the electrode catalyst particles which is the subject to be coated with good precision over a long time. Also, the polymer compound with the interpenetrating network structure has the characteristic of being reversibly expanding and contracting, so it is possible to easily remove the capsule element using an external stimulus.
(3) With the first embodiment and third embodiment described above, compounds that respond to temperature changes and pH changes were used as the capsule element, but, for example, it is also possible to include a compound that has responsiveness to light in the capsule element. By doing this, it is possible to easily remove the capsule element by irradiating light.

Above, we described various embodiments of the invention, but the invention is not limited to these embodiments, and it is obvious that it is possible to use various constitutions within a scope that does not stray from the key points.

## Claims

1. A manufacturing method of a fuel cell electrode, the manufacturing method comprising:
forming coated electrode catalyst particles by coating electrode catalyst particles with a compound having external stimulus responsiveness, wherein the electrode catalyst particles are comprised of an electrolyte and catalyst particles that catalytically active substance is supported on a carrier;
forming a thin film ,using the coated electrode catalyst particles,
applying an external stimulus the thin film, whereby the compound is removed from the thin film, or, proton conductivity is expressed on the coated electrode catalyst particles forming the thin film.

2. A manufacturing method in accordance with claim 1, wherein
the electrode catalyst particles are particles for which the catalyst particles and the electrolyte are almost uniformly mixed.

3. A manufacturing method in accordance with claim 1, wherein
the electrode catalyst particles is formed by the electrode catalyst particles the catalyst particles being coated with an electrolyte.

4. A manufacturing method in accordance with claim 1, wherein
the external stimulus responsiveness includes dissolving of the compound or decomposition of the compound, by an external stimulus, and
the removal of the compound is performed by applying to the thin film as the external stimulus at least one of a temperature change and a change in the hydrogen ion concentration.

5. A manufacturing method in accordance with any of claims 1 to 4, wherein
the coating of the electrode catalyst is performed by spray drying the electrode catalyst particles with an atmosphere of a solution containing the compound.

6. A manufacturing method in accordance with any of claims 1 to 5, wherein
the compound has an interpenetrating network structure.

7. A fuel cell electrode manufactured using the manufacturing method in accordance with any of claims 1 to 6.

8. An electrode catalytic solution comprising:
coated particles that an electrode catalyst is coated with a compound having external stimulus responsiveness are used as the dispersoid, wherein the electrode catalyst particles are comprised of an electrolyte and catalyst particles that catalytically active substance is supported on a carrier.
